# EUROPÄISCHE PATENTSCHRIFT

(11) **EP 0 621 419 B1**
(45) Veröffentlichungstag und Bekanntmachung des Hinweises auf die Patenterteilung: **12.03.1997**
(21) Anmeldenummer: 94106014.7
(22) Anmeldetag: 18.04.1994
(51) Int. Cl.: F16H 7/08

(54) **Kettenspanner mit Federvorspannung und hydraulischer Dämpfung**
Chain tensioner with spring preload and hydraulic damping
Tendeur de chaîne avec ressort de précontrainte et amortissement hydraulique

(30) Priorität: 20.04.1993 DE 9305913 U
(43) Veröffentlichungstag der Anmeldung: 26.10.1994
(73) Patentinhaber: JOH. WINKLHOFER & SÖHNE GmbH & Co KG, D-81369 München (DE)
(72) Erfinder: Schulze, Peter, D-85375 Neufahrn (DE)
(74) Vertreter: Grünecker, Kinkeldey, Stockmair & Schwanhäusser Anwaltssozietät

(56) Entgegenhaltungen:
- EP-A- 0 348 861
- GB-A- 2 194 310
- GB-A- 2 194 833
- US-A- 5 073 158

## Beschreibung

Die Neuerung betrifft einen federhydraulischen Kettenspanner.

Solche Kettenspanner werden beispielsweise in Verbrennungzmotoren für Steuerketten des Kurbelwellen-Nockenwellen-Kettentriebs vorgesehen. Der Spannkolben beaufschlagt durch die Federkraft vorgespannt über eine rungsschiene ein Trum der Steuerkette. Durch die Bewegungen des Spannkolbens baut sich in dem in den Kettenspanner eingeführten Schmieröl beträchtlicher Druck auf. Das Schmieröl bewirkt dank einer abströmseitigen Drosselöffnung eine wirksame Dämpfung der Kettenbewegungen und unterdrückt so störende Kettenlaufgeräusche.

In der Praxis offenkundig vorbenutzte Kettenspanner dieser Art weisen ein aus einer Leichtmetall-Legierung hergestelltes Druckgußgehäuse auf, in das der Spannkolben, die Feder und ein gesondert aus Kunststoff hergestellter Verdrängungskörper eingesetzt werden. Die Gehäuseinnenwand ist nachträglich feinbearbeitet. Die Herstellung und Montage sind kostenintensiv. Der Kettenspanner ist verhältnismäßig schwer. Es sind Versuche genannt worden, beim Druckgießen des Gehäuses eine Stahl-Laufhülse einzuformen, die in die Druckgußform eingelegt wird. An der Laufhülse ist außen ein Bund angeformt, einerseits um die Laufhülse fest mit der Innenwand des Gehäuses zu verbinden, andererseits um die Laufhülse beim Schließen der Form mittels eines Dorns gegen axiales Verschieben zu sichern. Aufgrund der hohen Materialtemperatur verzieht sich die Laufhülse. Sie muß nachträglich feinbearbeitet werden.

Der Neuerung liegt die Aufgabe zugrunde, einen Kettenspanner zu schaffen, der einfacher und kostengünstiger herstellbar und leichter ist als die bekannten.

Die Lösung der gestellten Aufgabe ist ein federhydraulischer Kettenspanner mit einem topfförmigen, aus stärktem Kunststoff hergestellten Gehäuse für den federbelasteten und hydraulisch beaufschlagbaren Spannkolben, und mit einer an der Innenwand des Gehäuses formschlüssig festgelegten Laufhülse aus Stahl, die als nachbearbeitungsfrei vorgefertigtes und gehärtetes Stahlrohrstück in das Gehäuse eingeformt ist.

Verstärkter Kunststoff erbringt die für den Betrieb und die Befestigung notwendige Gestaltfestigkeit, Form- und Maßtreue, und spart gegebenenfalls mehr als die Hälfte an Gewicht gegenüber einem Druckgußgehäuse. Es werden ein fester Sitz der Laufhülse sowie eine einfache Entformung des mit der Laufhülse geformten Gehäuses erreicht. Die Herstellung ist kostengünstig, weil eine Nachbearbeitung der Laufhülse entfällt. Die Laufhülse ist ein komplett vorgefertigtes und gehärtetes Stahlrohrstück, das sich bei der moderaten Verarbeitungstemperatur des Kunststoffes, z.B. ca. 180°C, nicht verzieht. Vorteilhaft ist ferner, daß die Laufhülse in der Form keine zusätzliche Verschiebesicherung benötigt und auch in ihrer Formgebung nicht auf die Verschiebesicherung abgestimmt zu werden braucht. Die Herstellung und Montage des Kettenspanners sind kostengünstig und einfach.

Um die Menge des für das Dämpfen benötigten Schmieröls kleinzuhalten, ist üblicherweise ein Verdrängungskörper im Kettenspanner enthalten, der bisher meist getrennt hergestellt und bei der Montage eingesetzt wird. Bei der Ausführungsform gemäß Anspruch 2 wird der Verdrängungskörper einstückig mit dem Gehäuse aus dem verstärkten Kunststoff geformt. Dies vereinfacht die Herstellung und die Montage und ist kostengünstig. Der Verdrängungskörper läßt sich - was ein wichtiger Aspekt der Neuerung ist - auch deshalb mit dem Gehäuse einstückig aus dem verstärkten Kunststoff ausbilden, weil bei der niedrigen Verarbeitungstemperatur des Kunststoffes die Laufhülse bereits nachbearbeitungsfrei vorgefertigt eingeformt wird, so daß kein Zugang für ein Nachbearbeitungswerkzeug mehr gebraucht wird, den der schon eingeformte Verdrängungskörper behindern würde.

Hohe Form- und Maßtreue sowie eine hohe Gestaltfestigkeit werden erreicht, wenn das Gehäuse aus faserverstärktem, vorzugsweise glasfaserverstärktem, Kunststoff, wie Polyamid, besteht.

Alternativ ist es aber auch möglich, das Gehäuse aus mit eingeschlossenen sphärischen Partikeln, vorzugsweise Glaskugeln, verstärktem Kunststoff, wie Polyamid, herzustellen.

Hervorragende Gebrauchseigenschaften, wie Resistenz gegen Schmieröl, hohe Dauerstandfestigkeit und Druckfestigkeit, werden erreicht, wenn der Anteil des kungsmaterials im Kunststoff ca. 35 Vol.-% beträgt.

Im Hinblick auf günstige Herstellungskosten ist die Ausführungsform gemäß Anspruch 7 vorteilhaft. Die Laufhülse kann ein Abschnitt eines Rohres sein. Sie besitzt einen stufenfreien zylindrischen Außenmantel, an dem sich die Kreuzrändelung leicht anbringen läßt. Ein stufenfreier Außenmantel gewährleistet über die Länge der Laufhülse gleichbleibende Wandstärke. Dadurch ist die Gefahr des Verziehens minimiert, was bei der niedrigen Verarbeitungstemperatur des Kunststoffes ehe kostengünstige Vorfertigung und Härtung der Laufhülse ermöglicht.

Bei der Ausführungsform gemäß Anspruch 8 ergibt sich über die gesamte Länge der Laufhülse eine gleichförmige Festlegung im Gehäuse.

Bei der Ausführungsform gemäß Anspruch 9 sorgen die Stahlbuchsen in den Aufnahmebohrungen für einen wirksamen Verschleißschutz.

Die Verstärkungsrippen mit den dazwischenliegenden, dünnwandigeren Feldern stellen gemäß Anspruch 10 sicher, daß die Befestigungslaschen nach dem Entformen und Erkalten ihre vorbestimmten Positionierungen behalten.

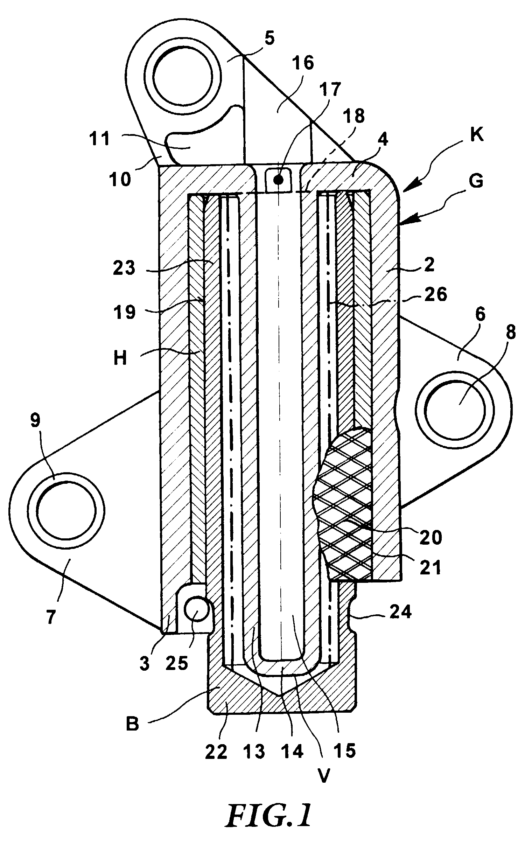

Anhand der Fig. 1 der Zeichnung wird eine Ausführungsform des Neuerungsgegenstandes erläutert.

Ein federhydraulischer Kettenspanner K weist ein aus verstärktem Kunststoff, zweckmäßigerweise als Spritzguß-Formteil, hergestelltes Gehäuse G auf. Das Gehäuse G ist topfförmig mit einer umlaufenden Topfwand 2 ausgebildet, die im Bereich einer Transporthilfeöffnung 25 eine Verlängerung 3 besitzt. Die Topfwand 2 geht in einen in etwa senkrecht zur Längsachse des Gehäuses G liegenden Topfboden 4 über. Außen sind am Gehäuse G drei Befestigungslaschen 5, 6, 7 angeformt, deren jede eine Aufnahmebohrung 8 für ein Befestigungselement besitzt. Die Aufnahmebohrungen 8 sind mit eingesetzten, vorzugsweise schon bei der Herstellung des Gehäuses G eingeformten, Stahlbuchsen 9 ausgekleidet. Jede Befestigungslasche weist quer zu ihrer Erstreckungsrichtung liegende Verstärkungsrippen 10 auf, zwischen denen sich Felder 11 deutlich geringerer Wandstärke befinden.

Am Topfboden 4 ist einstückig ein Verdrängungskörper V angeformt, der eine in etwa zylindrische Umfangswand 13 und ein außerhalb der Gehäuseöffnung liegendes Ende 14 besitzt. Der Verdrängungskörper V begrenzt einen innenliegenden Hohlraum 15, der sich bis den Topfboden 4 hindurch erstreckt und - bei der gezeigten Ausführungsform - durch eine Ausnehmung 16 in der Befestigungslasche 5 verlängert wird. Die Ausnehmung 16 dient zum Einführen und Herausziehen eines Formkerns, mit dem der Verdrängungskörper V einstückig mit dem Gehäuse G geformt wird. Im Topfboden 4 mündet eine von außen an eine Schmierölzufuhr anschließbare Drosselöffnung 17, die über eine nicht näher dargestellte Ausnehmung 18 mit dem Innenraum des Gehäuses G verbunden ist.

In das Gehäuse G ist eine zylindrische Laufhülse H eingeformt, die durch eine Kreuzrändelung 20 auf ihrem Außenmantel mit der Topfwand 2 verbunden ist. Die Laufhülse H ist ein Rohrstück 21 aus gehärtetem Stahl. Die mit 19 bezeichnete, innenliegende Lauffläche ist fein bearbeitet, z.B. geschliffen. Die Laufhülse H erstreckt sich im wesentlichen über die gesamte Länge der Topfwand 2.

In das Gehäuse G ist von der Gehäuseöffnung her ein topfförmiger Spannkolben B eingesetzt. Der Spannkolben B besitzt eine zylindrische Kolbenwand 23, mit der er in der Laufhülse H verschiebbar geführt ist, und einen Kolbenboden 22. Die Kolbenwand 23 umgibt den Verdrängungskörper V mit einem Radialspiel. In der auf diese Weise gebildeten Ringkammer ist eine Druckfeder 26 gelagert, die sich mit einem Ende am Topfboden 4 und mit dem anderen Ende am Kolbenboden 22 abstützt. Die Kolbenwand 23 besitzt am außerhalb des Gehäuses G liegenden Ende einen umlaufenden Einstich 24 für einen Transport-Sicherungsbolzen (nicht gezeigt).

Das mit dem Verdrängungskörper V einstückig hergestellte Gehäuse G besteht aus einem verstärkten Kunststoff, zweckmäßigerweise aus faserverstärktem, vorzugsweise glasfaserverstärktem, Kunststoff, wie Polyamid, wobei der Anteil an Verstärkungsmaterial ca. 35 Vol.-% beträgt. Glasfaserverstärktes Polyamid ist beispielsweise unter der Handelsbezeichnung "Ultramid" A3WG7 in Granulatform erhältlich, wobei jedes Granulatkörnchen ein Glasfaserstück einer vorbestimmten Länge und Stärke enthalten kann.

Bei der Herstellung des Gehäuses wird zunächst die Laufhülse H in die Form eingelegt und positioniert. Die Laufhülse H ist komplett vorgefertigt und wird später nicht mehr nachbearbeitet. Beim Zusammenfahren der Formhälften greifen Kernteile in den Ringraum zwischen der Innenwand 19 der Laufhülse H und der Außenwand des späteren Verdrängungskörpers V und in den Hohlraum 15. Dann wird der Kunststoff mit einer Temperatur von ca. 180° C eingespritzt. Anschließend wird die Form geöffnet und das Gehäuse G mit der eingeformten Laufhülse H entformt. Das entformte Gehäuse G wird gegebenenfalls entgratet und ist dann zur Montage fertig.

Im Betrieb sorgt die Feder 26 für die Spannkraft zum Spannen der Kette. Das Schmieröl, das z.B. mit einem Druck von 6 bar zugeführt wird, hat die Aufgabe, Kettenschwingungen bzw. oszillierende Bewegungen des Spannkolbens B zu dämpfen. Unter den auf den Spannkolben B ausgeübten Belastungen wird innerhalb des Spannkolbens B ein höherer Druck erzeugt als der Zuführdruck. Der Spannkolben B kann gegebenenfalls mit einem Dämpfungsring versehen sein.

## Patentansprüche

1. Federhydraulischer Kettenspanner (K),
mit einem topfförmigen, aus verstärktem Kunststoff hergestellten Gehäuse (G) für einen federbelasteten und hydraulisch beaufschlagbaren Spannkolben (B),
mit einer an der Innenwand des Gehäuses (G) formschlüssig festgelegten Laufhülse (H) aus Stahl, die als nachbearbeitungsfrei vorgefertigtes und gehärtetes Stahlrohrstück (21) in das Gehäuse eingeformt ist.

2. Kettenspanner nach Anspruch 1, mit einem sich vom Topfboden (4) des Gehäuses (G) in Richtung zur Gehäuseöffnung erstreckenden Verdrängungskörper (V),
**dadurch gekennzeichnet**,
daß das Gehäuse (G) mit dem Verdrängungskörper (V) aus dem verstärkten Kunststoff einstückig ausgebildet ist.

3. Kettenspanner nach den Ansprüchen 1 oder 2,
**dadurch gekennzeichnet**,
daß das Gehäuse (G) ein Spritzguß-Kunststoffformteili ist.

4. Kettenspanner nach einem der Ansprüche 1 bis 3,
**dadurch gekennzeichnet**,
daß das Gehäuse (G) aus faserverstärktem, vorzugsweise glasfaserverstärktem, Kunststoff, wie Polyamid, besteht.

5. Kettenspanner nach einem der Ansprüche 1 bis 3,
**dadurch gekennzeichnet**,
daß das Gehäuse (G) aus mit eingeschlossenen sphärischen Partikeln, vorzugsweies Glaskugeln, verstärktem Kunststoff, wie Polyamid, besteht.

## Claims

1. Spring hydraulic chain tensioner (K) having a pot-shaped housing (G) made from reinforced plastic for a spring-loaded and hydraulically loadable tension piston (B), having a steel sliding sleeve (H) fixed positively to the inner wall of the housing (G) and which is moulded into the housing as a prefabricated and hardened piece of steel pipe (21) which does not need reworking.

2. Chain tensioner according to claim 1, having a displacement body (V) extending from the pot base (4) of the housing (G) in the direction towards the housing opening, characterised in that the housing (G) is designed to be integral with the displacement body (V) made from the reinforced plastic.

3. Chain tensioner according to claims 1 or 2,
characterised in that the housing (G) is an injection moulded plastic moulding.

4. Chain tensioner according to one of claims 1 to 3,
characterised in that the housing (G) consists of fibre-reinforced, preferably glass fibre-reinforced plastic, such as polyamide.

5. Chain tensioner according to one of claims 1 to 3,
characterised in that the housing (G) consists of plastic, such as polyamide, reinforced by incorporated spherical particles, preferably glass balls.

## Revendications

1. Tendeur de chaîne hydraulique à ressort, (K), comprenant un carter (G) en forme de boisseau, réalisé en matière plastique armée, recevant un piston tendeur (B) précontraint par ressort et pouvant être soumis à une action hydraulique,
comportant une chemise (H) en acier immobilisée dans le carter (G) par conjugaison des formes avec la paroi intérieure de celui-ci, et moulée dans le carter en formant un insert tubulaire (21) en acier trempé préfabriqué sans retouche d'usinage.

2. Tendeur de chaîne selon la revendication 1, comprenant un corps déplaceur (V) s'étendant depuis le fond (4) du boisseau du carter (G) vers l'embouchure du carter,
caractérisé en ce que le carter (G) est réalisé en matière plastique armée, d'un seul tenant avec le corps déplaceur (V).

3. Tendeur de chaîne selon les revendications 1 ou 2, caractérisé en ce que le carter (G) est une pièce moulée par injection en matière plastique.

4. Tendeur de chaîne selon l'une des revendications 1 à 3, caractérisé en ce que le carter (G) est réalisé en une matière plastique, par exemple en polyamide, armé(e) de fibres, de préférence armé(e) de fibres de verre.

5. Tendeur de chaîne selon l'une des revendications 1 à 3, caractérisé en ce que le carter (G) est réalisé en une matière plastique, par exemple en polyamide, armé(e) de particules sphériques enrobées, de préférences armé(e) de billes de verre.
